# EUROPÄISCHE PATENTSCHRIFT

(11) **EP 2 397 194 B1**
(45) Veröffentlichungstag und Bekanntmachung des Hinweises auf die Patenterteilung: **29.03.2017**
(21) Anmeldenummer: 11168208.4
(22) Anmeldetag: 31.05.2011
(51) Int. Cl.: A62C 27/00, B62D 33/067, B60R 3/00, E01F 9/70, B60J 10/00

(54) **Feuerwehrfahrzeug**
Fire-fighting vehicle
Camion de pompiers

(30) Priorität: 31.05.2010 AT 8832010
(43) Veröffentlichungstag der Anmeldung: 21.12.2011
(73) Patentinhaber: Rosenbauer International AG, 4060 Leonding (AT)
(72) Erfinder: Ronacher, Alexander, 4063 Hörsching (AT); Zauner, Stefan, 4101 Feldkirchen a.d. Donau (AT)
(74) Vertreter: Burger, Hannes

(56) Entgegenhaltungen:
- WO-A1-95/21088
- WO-A2-03/049987
- DE-A1-102006 040 717
- DE-U1-202008 007 972
- GB-A- 702 743
- JP-A- 2006 036 127
- US-A- 4 378 856
- US-A- 5 803 475
- US-A1- 2009 267 385

## Beschreibung

Die Erfindung betrifft einen Lastkraftwagen, insbesondere ein Feuerwehr-Einsatzfahrzeug.

Bei Lastkraftwagen welche als Einsatzfahrzeug Verwendung finden besteht aufgrund ihres bestimmungsgemäßen Einsatzgebietes die Notwendigkeit, Einsatzkräfte und Einsatzgerät möglichst rasch und sicher zum Einsatzgebiet zu befördern, wobei das Erreichen des Einsatzgebietes für die Einsatzkräfte bzw. auch für das Einsatzfahrzeug zumeist mit einer erhöhten Gefährdung für die Sicherheit verbunden ist. Beispielsweise kann der Einsatzort auf einem Verkehrsweg mit erhöhtem Verkehrsaufkommen liegen, sodass an das Einsatzfahrzeug mehrere zu lösende Anforderungen gestellt sind. Einerseits ist der Einsatzort möglichst schnell zu erreichen, um dort die Einsatzkräfte absetzten zu können, wobei beim Absetzten der nachfolgende Verkehr bereits entsprechend geleitet bzw. eingeschränkt werden soll, um ein gefahrloses Absetzten der Einsatzkräfte zu ermöglichen. Ferner müssen die Einsatzkräfte gegenüber den am Einsatzort herrschenden Umgebungsbedingungen möglichst gut geschützt werden.

Um eine möglichst individuelle Konfigurierbarkeit der Einsatzfahrzeuge auf die speziellen Bedürfnisse zu gewährleisten, ist dieses zumeist stark modularisiert aufgebaut, wobei an einem vorderen Ende des Fahrgestells des Lastkraftwagens eine Fahrerkabine angeordnet ist, der verbleibende Aufbauraum des Fahrgestells kann nun mit verschiedenen Aufbaumodulen konfiguriert werden, wobei insbesondere ein Mannschaftstransportmodul bevorzugt unmittelbar hinter der Fahrerkabine angeordnet sein wird. Zur Kommunikation zwischen dem Einsatzleiter, der bevorzugt in der Fahrerkabine Platz genommen hat und den Einsatzkräften in der Mannschaftskabine, weisen die beiden Kabinen einander zugewandt eine Durchtrittsöffnung auf, die von einer Dichtung gegen die Umgebung abgeschottet werden muss. Da die Fahrerkabine zumeist gefedert mit dem Fahrgestell verbunden ist, die Aufbauten am Fahrgestell zumeist nicht oder nur sehr gering, muss diese Dichtung in der Lage sein, Relativbewegungen der Fahrerkabine, beispielsweise beim Beschleunigen, Bremsen und bei Verwindungen des Aufbaus auszugleichen, ohne die Abdichtung zu verlieren.

Dazu zeigt beispielsweise die AT 413 205 B einen Lastkraftwagen mit einer Fahrer- und einer Mannschafts- und/oder Gerätekabine, mit einem dazwischen angeordneten Dichtelement, welches als Balgdichtelement ausgebildet ist. Das Balgdichtelement ist dabei über einen Befestigungsrahmen mit der Mannschafts- und/oder Gerätekabine verbunden und über einen Anschlagrahmen mit mehreren, in Umfangrichtung angeordneten Dauermagneten, mit der Fahrerkabine verbunden. Über einen Haltearm wird das Balgdichtelement relativ zur Querwand der Mannschafts- und/oder Gerätekabine gehalten.

Dieses Balgdichtelement ist nun in seiner Herstellung komplex und damit kostenintensiv, da Dauermagneten integriert angeordnet werden müssen, ferner ist ein Halteelement erforderlich, um das Dichtelement in seiner Position zu halten. Auch besteht bei einem starken Wasserzutritt, wie dies bei Feuerwehrfahrzeugen im Einsatz durchaus möglich ist, die Gefahr, dass zutretendes Wasser vom Deckrahmen nicht ausreichend abgelenkt wird und somit ein Wassereintritt in die Fahrerkabine bzw. in den Mannschafts- und/oder Geräteraum möglich ist.

Die Aufgabe der Erfindung liegt also darin, ein Einsatzfahrzeug zu schaffen, welches einen Schutz der Einsatzkräfte gegenüber Umgebungseinflüssen am Einsatzort sowie einen Schutz der Einsatzkräfte und des Einsatzfahrzeugs beim Anfahren des Einsatzortes bietet. Auch ist aus dem Stand der Technik keine Aufstiegshilfe für einen Aufbau eines Lastkraftwagens bekannt, welche platzsparend am Lastkraftwagen angebracht werden kann und trotzdem eine hohe Zutrittsicherheit bietet. Eine weitere Aufgabe der Erfindung liegt also darin die Zutrittssicherheit zu Aufbauten am Lastkraftwagen bei gleichzeitiger Platzreduktion zu verbessern.

Eine Aufgabe der Erfindung wird durch ein Dichtelement gelöst, welches einen Durchgang zwischen der Fahrerkabine und der Mannschafts- und/oder Gerätekabine, insbesondere einen Kabinen-Innenraum von einem Außenraum trennt, welches Dichtelement einen Grundkörper mit einer elastische Dichtfahne, ein Dichtprofil und einen nutförmigen Klemmabschnitt aufweist und mittels eines Verbindungsmittels mit dem Befestigungsrahmen verbunden ist. Das Dichtelement hat insbesondere die Aufgabe, den Kabinen-Innenraum gegenüber Umwelteinflüssen am Einsatzort abzudichten, wobei insbesondere eine Abdichtung gegen gasförmige Stoffe, wie im Brandfall entstehende Rauchgase, sowie gegebenenfalls unter Hochdruck auftreffendes Löschwasser abzudichten. Da am Fahrgestell des Lastkraftwagens ggf. ein Löschmitteltank, eine Löschmittelpumpe vorhanden sein können, ist beim einsatzgemäßen Betrieb dieser Vorrichtungen, stets mit dem Eintreffen eines Wasserschwalls auf den Lastkraftwagen zu rechnen bzw. kommt es aufgrund des Gewichts des Aufbaus zu einer teilweise recht starken Verschränkung des Fahrgestells. Da die Fahrerkabine beweglich mit dem Fahrgestell verbunden ist, insbesondere wird aus Komfortgründen eine Federung vorgesehen sein, die Mannschafts- und/oder Gerätekabine jedoch zumeist starr mit dem Fahrgestell verbunden ist, muss das Dichtelement die Abdichtung auch bei einer Relativbewegung der Fahrerkabine zur Mannschafts- und/oder Gerätekabine aufrecht erhalten. Insbesondere kommt es beim Abbremsen des Fahrzeugs zu einer Entfernung der Fahrerkabine von der Mannschafts- und/oder Gerätekabine, wobei die erfindungsgemäße Ausbildung des Dichtelements den Vorteil hat, dass beim Abbremsen des Lastkraftwagens die Dichtfahne am Schenkel des Rahmens anliegt und somit auch in diesem Fall eine Abdichtung des Kabinen-Innenraums gegenüber des Außenraums gegeben ist. Im Ruhezustand des Lastkraftwagens liegt das Dichtprofil derart am Anlegeabschnitt an, dass dieses zusammengedrückt wird, wodurch es zu einer reversiblen Querschnittsänderung des Dichtprofils kommt und wobei ferner die Dichtfahne in einem Randbereich des Anlegeabschnitts an diesem anliegt, wodurch eine doppelte Abdichtung gegeben ist. Auch bei Verschränkbewegungen der Fahrerkabine gegenüber der Mannschafts- und/oder Gerätekabine, wie dies bspw. im Fahrbetrieb auf unebenem Untergrund vorkommen kann, ist stets die Abdichtung des Kabinen-Innenraums gegenüber dem Außenraum gewährleistet, da die seitlichen Abschnitte des Dichtelements aufgrund der Elastizität der Dichtfahne bzw. des Dichtprofils, auch diese Verschränkbewegung ausgleichen können.

Zur Reduktion des Zutritts von Schwallwasser zum Dichtelement weist der Deckrahmen einen im Wesentlichen L-förmigen Schenkel auf, welcher das Dichtelement zumindest teilweise umfasst, wodurch ein eintreffender Schwallwasserstrahl zu Teil in Richtung des Befestigungsrahmens abgelenkt wird, so dass nur eine geringe Menge Schwallwasser zur Dichtfahne gelangt. Zur Ableitung von eintreffendem Schwallwasser ist es ferner von Vorteil, wenn der Befestigungsrahmen, welcher über einen nutförmigen Klemmabschnitt des Dichtelements und mittels eines Verbindungsmittels mit diesem verbunden ist, einen im Wesentlichen U-förmigen Querschnitt aufweist, da dieser Befestigungsrahmen somit eine Art Ablaufrinne ausbildet, wodurch eintreffendes Schwallwasser vom Dichtelement und damit vom Fahrzeugaufbau in kontrollierter Weise abgeleitet und somit die Gefahr einer Stauwasserbildung im Bereich des Dichtelements verhindert wird.

Die erfindungsgemäße Ausbildung hat nun den Vorteil, dass sowohl im Ruhezustand als auch bei einer verzögernden Bewegung des Fahrzeugs und bei Verschränkungen des Aufbaus, eine zuverlässige Abdichtung des Kabinen-Innenraums gegenüber dem Außenraum gegeben ist, wobei insbesondere das Dichtelement einen großen relativen Bewegungsspielraum abdecken kann, ohne dass es dadurch zu einer starken Deformation kommt bzw. dass keine große Längenausgleichsbeweglichkeit dafür erforderlich ist. Dies wird sowohl durch die in Dachnähe des Fahrzeugaufbaus angeordneten Abschnitte des Dichtelements, als auch die seitlich ausgerichteten Abschnitte erreicht, da aufgrund der Elastizität der Dichtfahne und des Dichtprofils ein großer relativer Bewegungsspielraum abgedeckt werden kann.

Eine vorteilhafte Weiterbildung erhält man auch dadurch, dass das Dichtprofil eine in Richtung des Außenraums orientierte Schwall-Abweisnase aufweist, da somit eine erste Barriere für zutretendes Schwallwasser gegeben ist, da dieses ab- bzw. umgelenkt wird und nicht oder nur ein geringer Teil die Abweisnase passiert und auf die Dichtfahne gelangt. Je geringer die Wassermenge ist, die von der Dichtfahne abgelenkt werden muss, desto geringer ist die Gefahr eines Wasserzutritts in den Kabinen-Innenraum.

Eine vorteilhafte Weiterbildung liegt darin, dass das Dichtprofil durch ein elastisches Hohlprofil gebildet ist, wobei ein Profil mit einem im Wesentlichen kreisförmigen Querschnitt bevorzugt ist. Da im Ruhezustand des Lastkraftwagens das Dichtprofil am Anlegeabschnitt anliegt und es dadurch zu einer Querschnittsänderung des Dichtprofils kommt, ist ein Profil mit einem kreisförmigen Querschnitt dahingehend von Vorteil, dass sich ein derartiger Querschnitt besonders gut an die Kontur des Anlegeabschnitts anpasst und somit eine gute und insbesondere großflächige Abdichtung gewährleistet ist. Auch sind bei einem kreisförmigen Querschnitt eines Hohlprofils die mechanischen Belastungen entlang des Umfangs möglichst gleichmäßig verteilt, sodass auch nach einer langen Einsatzdauer des Dichtprofils nur eine sehr geringe Materialbelastung gegeben ist und somit die Gefahr einer Materialermüdung und damit einem Verlust der Elastizität mit einhergehendem Verlust der Dichtfähigkeit verhindert ist.

Eine Weiterbildung nach der das Dichtprofil entlang des Umfangs zumindest zwei Einschnürungen der Wandstärke aufweist, hat den Vorteil, dass dadurch eine bevorzugte Deformationsrichtung des Dichtprofils beim Anlegen am Anlegeabschnitt ausgebildet werden kann.

Zuvor gesagtes gilt auch für eine Weiterbildung, nach der der Grundkörper als Hohlprofil ausgebildet ist, welches entlang des Umfangs zumindest zwei Einschnürungen der Wandstärke aufweist. Aufgrund der auftretenden Deformation beim Anlegen des Dichtelements am Anlegeabschnitt wird gegebenenfalls auch der Grundkörper deformiert, wobei es auch hier von Vorteil ist, wenn eine Vorzugsrichtung der Deformation vorgegeben werden kann.

Eine Weiterbildung nach der das Dichtprofil dem Kabinen-Innenraum zugewandt angeordnet ist und somit die Dichtfahne dem Außenraum zugewandt angeordnet ist, hat den Vorteil, dass im Ruhezustand des Lastkraftwagens, das Dichtprofil fest gegen den Anlegeabschnitt gedrückt wird und somit eine zuverlässige Abdichtung gegeben ist. Dadurch wird gegebenenfalls zutretendes Schwallwasser von der Dichtfahne abgefangen und vom Dichtprofil weggeleitet, wobei ferner gegebenenfalls ein die Dichtfahne passierendes Schwallwasser vom fest anliegenden Dichtprofil vom Kabinen-Innenraum abgelenkt in eine Rinne des Dichtelements geleitet wird und somit ein Wasserzutritt zum Kabinen-Innenraum zuverlässig verhindert wird. In einer Weiterbildung kann das Dichtprofil aber auch dem Außenraum zugewandt sein und bildet somit die erste Schranke gegen zutretendes Schwallwasser.

Im Hinblick auf eine möglichst einfache Fertigung des Dichtelements bzw. eine möglichst einfache Anbringung des Dichtelements am Befestigungsrahmen ist eine Weiterbildung von Vorteil, nach der der Grundkörper eine Außenfläche mit einer Haftschicht aufweist, wobei diese Haftschicht bevorzugt adhäsiv wirkend ausgebildet ist. Dadurch ist es möglich, eine Lasche des Befestigungsrahmens in den nutförmigen Klemmabschnitt einzuführen und den Grundkörper des Dichtelements gegen den Befestigungsrahmens zu drücken, wodurch dieser aufgrund der Haftschicht mit diesem verbunden wird. Die Haftschicht hat ferner den Vorteil, dass dadurch eine flüssigkeits- und gasdichte Verbindung zwischen den Befestigungsrahmen und dem Grundkörper des Dichtelements ausgebildet werden kann.

Ebenfalls im Hinblick auf eine möglichst rationelle Fertigung des Dichtelements ist eine Weiterbildung von Vorteil, nach der das Verbindungsmittel als Klammer ausgebildet ist, welche in eine Ausnehmung des Grundkörpers eingreift und den Grundkörper am Befestigungsrahmen fixiert. Das Dichtelement wird also über die nutförmige Klemmvorrichtung mit dem Befestigungsrahmen verbunden, woraufhin eine Klammer eingelegt wird, welche beispielsweise vorgespannt ausgebildet sein kann und somit den Grundkörper und damit das Dichtelement am Befestigungselement fixiert. Auch für Servicezwecke ist diese Weiterbildung von Vorteil, da im Wesentlichen ohne Spezialwerkzeug die Klammer entfernt werden kann und somit eine einfacher Austausch des Dichtelements möglich ist.

Für eine zuverlässige Abweisung zutretenden Schwallwassers ist eine Weiterbildung von Vorteil, nach der die Dichtfahne im Querschnitt zum Außenraum hin konkav gekrümmt ist, da somit Wasser zuverlässig vom Dichtbereich weggelenkt wird und somit die Gefahr des Eindringens von Wasser in den Kabinen-Innenraum zuverlässig verhindert wird.

Eine Aufgabe der Dichtfahne kann darin gesehen werden, den Zutritt von Wasser zum Dichtabschnitt soweit als möglich zu verhindern, um somit die Anforderungen an die Abdichteigenschaften des Dichtelements, insbesondere bei einer Bewegung des Lastkraftwagens und einer damit verbundenen Relativbewegung zwischen der Fahrerkabine und der Mannschafts- und/oder Gerätekabine zu verringern. Weist die Dichtfahne gemäß einer Weiterbildung am freien Ende eine zum Außenraum rückwärts gerichtete Abweisnase auf, wird Schwallwasser, welche den Schenkel des Eckrahmens passiert hat und auf die Dichtfahne zuströmt, zurückgeleitet und beispielsweise über die Rinne des Befestigungsrahmens abgeleitet. Insbesondere bildet diese rückwärts gerichtete Abweisnase einen rinnenartigen Ablauf aus, wodurch Wasser gezielt abgeleitet werden kann und ferner ein Überschwappen in den Dichtbereich des Dichtprofils verhindert werden kann.

In einer Weiterbildung kann auf die dem Kabinen-Innenraum zugewandten Flächen der Dichtfahne und des Dichtprofil zumindest abschnittsweise eine Gleitlack aufgebracht sein, was den Vorteil hat, dass ein guter Bewegungsausgleich bei einer Relativbewegung zwischen Fahrerkabine und Mannschafts- und/oder Gerätekabine möglich ist, ohne dadurch das Dichtelement aufgrund einer Anhaftung der Dichtflächen zu stark zu verformen, was für die Einsatzdauer von Vorteil ist. Auch kann die Belackung den Reibungskoeffizienten zwischen Dichtelement und Rückwand der Fahrerkabine reduzieren, um so den Bewegungsausgleich zu verbessern, gleichzeitig aber die Abdichtung aufrecht zu erhalten.

Der Schenkel ist das erste Element, welches ein zutretendes Schwallwasser vom Dichtelement ablenken und beispielsweise in die Rinne des Befestigungsrahmens lenken soll. Dieser Schenkel soll diese Lenkfunktion nun sowohl im Ruhezustand des Lastkraftwagens, als auch bei Bewegung, insbesondere beim Abbremsen sicherstellen, was mit einer Weiterbildung, nach der die Breite des Schenkels zumindest dem Horizontalabstand zwischen dem freien Ende der Dichtfahne und der Schwall-Abweisnase entspricht erreicht wird, da somit der Schenkel auch bei einer starken Vorwärtsneigung der Fahrerkabine das Dichtelement, insbesondere die Dichtfahne überdeckt und somit zwischen Schenkel und Dichtfahne eine zuverlässige Abdichtung erreicht wird.

Eine Weiterbildung besteht ferner darin, dass die Querschnittsänderung zumindest 50% der unkomprimierten Ausdehnung in Richtung zwischen dem Befestigungsrahmen und dem Deckrahmen beträgt, was den Vorteil hat, dass im Ruhezustand des Lastkraftwagens das Dichtprofil gut gegen den Anlegeabschnitt gedrückt wird und somit eine zuverlässige Abdichtung gewährleistet ist. Bei einer bevorzugten Ausbildung des Dichtprofils als Hohlprofil bedeutet diese Weiterbildung, dass der Durchmesser des Hohlprofils in Richtung zum Anlegeabschnitt auf zumindest 50 % reduziert wird.

Für das Anlegen des Dichtprofils am Anlegeabschnitt zur Bildung einer möglichst großflächigen Abdichtfläche ist es von Vorteil, wenn der Anlegeabschnitt rampenförmig ausgebildet ist, da sich somit das Dichtprofil, als auch die, das Dichtprofil in Richtung des Anlegeabschnitts überragende Dichtfahne, besonders gut an den Anlegeabschnitt anlegen können und somit einen möglichst großflächigen Dichtabschnitt bilden.

Bei einer Relativbewegung der Fahrerkabine zur Mannschafts- und/oder Gerätekabine wird der Schenkel des Deckrahmens eine im Wesentlichen horizontale Bewegung ausführen, wobei von Vorteil ist, wenn zwischen der Oberkante der Schwall-Abweisnase und der Endkante des Schenkels ein vertikaler Abstand besteht, da somit ein Kontakt des Schenkels mit der Schwall-Abweisnase verhindert wird, wodurch es zu keiner zusätzlichen Deformation des Dichtelements kommt. Dies ist insbesondere auch beim Verschwenken der Fahrerkabine von Vorteil, da dadurch das Dichtelement die Verschwenkbewegung nicht beeinträchtigt, ein Eingreifen der Dichtfahne in den Deckrahmen jedoch gewährleistet ist.

Zum besseren Verständnis der Erfindung wird diese anhand der nachfolgenden Figuren näher erläutert.

Es zeigen jeweils in stark schematisch vereinfachter Darstellung:
- Fig. 1: Einen Lastkraftwagen nach dem Stand der Technik;
- Fig. 2: Ein Dichtelement nach dem Stand der Technik;
- Fig. 3: Das erfindungsgemäße Dichtelement;
- Fig. 4: a) bis c) Das erfindungsgemäße Dichtelement in unterschiedlichen Betriebssituationen;

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.
Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

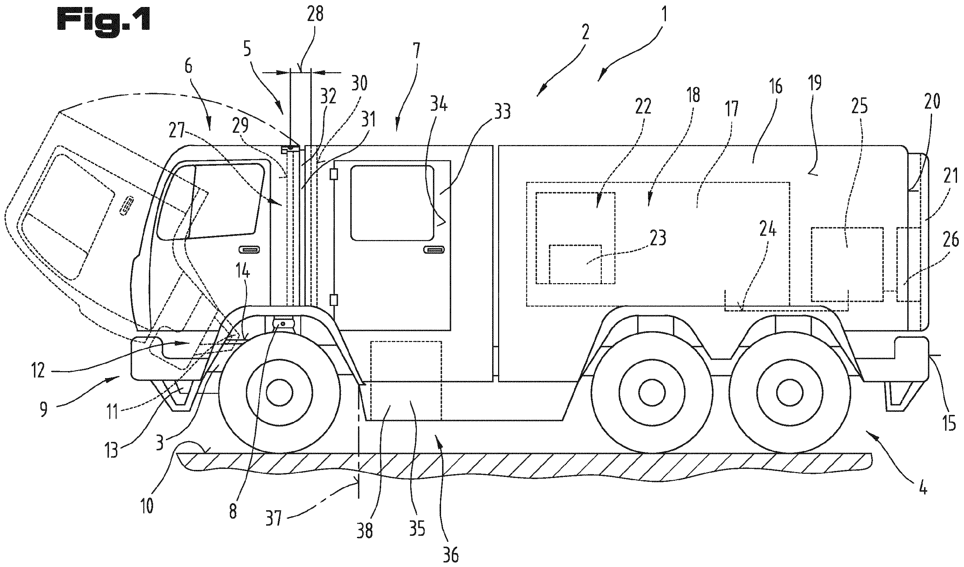

Fig. 1 zeigt einen Lastkraftwagen 1 wie er aus dem Stand der Technik bekannt ist, insbesondere handelt es sich dabei um ein Feuerwehr-Einsatzfahrzeug 2. Bei diesem ist auf einem Fahrgestell 4, insbesondere einem Fahrgestellrahmen 3, eine Fahrerkabine 6 angeordnet, welche um eine Achse 11 verschwenkbar ist, beispielsweise um auf darunter liegende, technische Einrichtungen zugreifen zu können. An die Fahrerkabine 6 anschließend ist eine Mannschafts- und/oder Gerätekabine 7 angeordnet und mit dem Fahrgestell 4 verbunden. Im Unterschied zur Fahrerkabine 6, welche gefedert mit dem Fahrgestell 4 verbunden ist, ist die Mann schafts- und/oder Gerätekabine 7 fest mit dem Fahrgestell 4 verbunden, wodurch es bei einer Bewegung des Lastkraftwagens 1, bspw. beim Beschleunigen, beim Abbremsen, oder bei Verschränkungen des Fahrgestells, zu einer Relativbewegung zwischen der Fahrerkabine 6 und der Mannschafts- und/oder Gerätekabine 7 kommt. Der Abstand 28 zwischen der Fahrer-6 und Mannschafts- und/oder Gerätekabine 7 wird durch eine Verbindungsvorrichtung 31 mit einem Balgdichtelement 32 überbrückt, sodass ein Durchtritt von der Fahrerkabine 6, über eine Öffnung 27 zur Mannschafts- und/oder Gerätekabine 7 möglich ist.

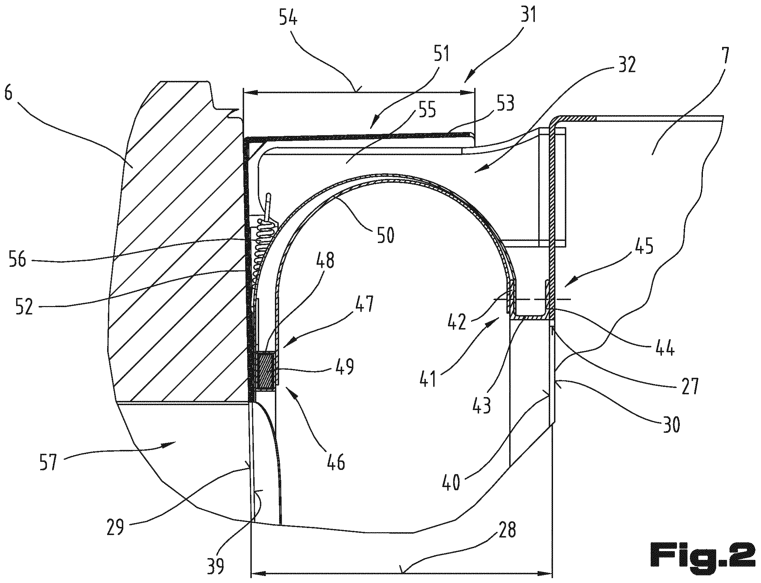

Fig. 2 zeigt eine Detaildarstellung der Verbindungsvorrichtung 31 nach dem Stand der Technik, welche zwischen der Fahrer- 6 und Mannschafts- und/oder Gerätekabine 7 angeordnet ist. Das Balgdichtelement 32 ist an einem Schenkel 42 eines Befestigungsrahmens 41, welcher bevorzugt als U-Profil 43 ausgebildet ist, mit der Mannschafts- und/oder Gerätekabine 7 verbunden. Gegenüberliegend weist das Balgdichtelement 32 einen Anschlagrahmen 47 mit Dauermagneten 49 auf, über welchen das Balgdichtelement 32 mit der Rückwand 39 der Fahrerkabine 6 verbunden ist. Zur mechanischen Fixierung des Balgdichtelements ist ein Haltearm 55 vorgesehen, der mittels einer vorgespannten Feder 46 das Dichtelement fixiert und in seiner Position hält. Als Abgrenzung nach außen ist ein Deckrahmen 51 vorgesehen, der mit einer Schenkellänge 54 das Balgdichtelement 32 zumindest teilweise überdeckt und somit eine Lenkung eines auftreffenden Schwallwassers in Richtung des Befestigungsrahmens 41 gewährleisten soll.

Bei Zutritt von Schwallwasser kann es nun vorkommen, dass dieses vom Schenkel 53 des Deckrahmens 51 nicht vollständig abgelenkt wird, wodurch Wasser in den Bereich der Haftvorrichtung 46 gelangt und dort gegebenenfalls in den Kabinen-Innenraum 57 gelangt. Auch ist ein Bewegungsausgleich zwischen den Kabinen, insbesondere bei Verschränkbewegungen, nur eingeschränkt möglich.

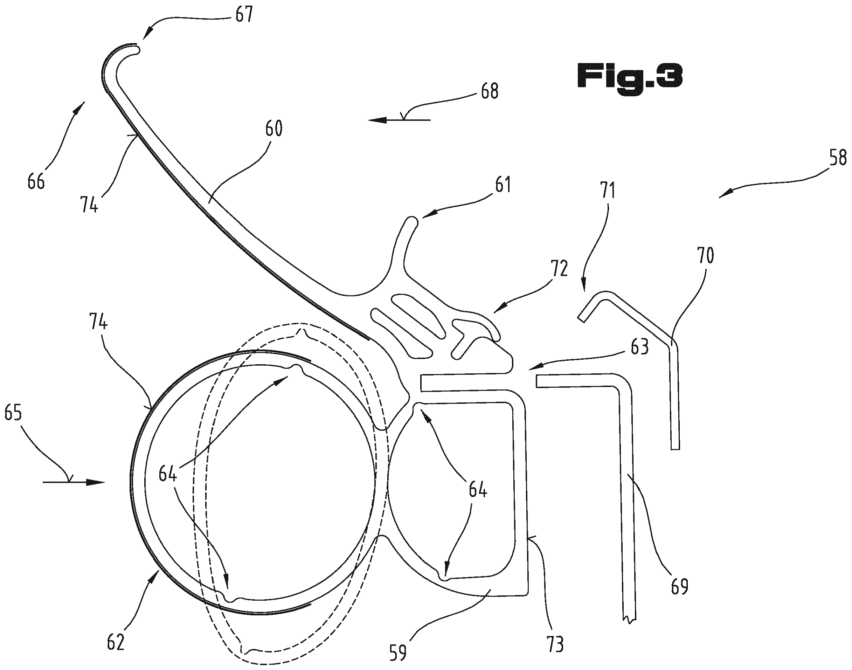

Fig. 3 zeigt das erfindungsgemäße Dichtelement 58, welches einen Grundkörper 59, eine elastische Dichtfahne 60, eine Schwall-Abweisnase 61, ein Dichtprofil 62 und einen nutförmigen Klemmabschnitt 63 aufweist. Das Dichtprofil 62 und/oder der Grundkörper 59 sind bevorzugt als Hohlprofil ausgebildet und weisen entlang ihres Umfangs Einschnürungen 64 des Manteldurchmessers auf. Kommt es aufgrund des Einbaus des Dichtelements 58 durch das Anliegen des Anlegerahmen zu einer Krafteinwirkung 65 auf das Dichtprofil 62 und dadurch auch auf den Grundkörper 59, werden sich diese aufgrund der vorgegebenen Einschnürungen 64 in eine Vorzugsrichtung deformieren, wie dies in Fig. 3 stark vereinfach für das Dichtprofil strichliert dargestellt ist.

Die Dichtfahne 60 weist in ihrem äußeren Endbereich 66 eine rückwärts gekrümmte Abweisnase 67 auf, die zusammen mit der zum Außenraum konkaven Krümmung der Dichtfahne 60 sicherstellen soll, dass eintreffendes Schwallwasser 68 zurückgelenkt wird, insbesondere dass somit verhindert wird, dass Wasser den Endbereich 66 passieren kann und somit in den Dichtbereich des Dichtprofils 62 gelangt. Dies wird später im Detail noch beschrieben.

Eine erste Barriere für eintretendes Schwallwasser ist bereits die Schwall-Abweisnase 61, da dadurch bereits ein großer Teil des eintreffenden Wassers abgelenkt werden kann, sodass die Wassermenge, welche auf die Dichtfahne 60 gelangt, deutlich reduziert wird.

Durch Anordnen des Dichtelements 58 am Befestigungsrahmen 69, insbesondere durch Einschieben eines Schenkels des Befestigungsrahmens 69 in den nutförmigen Klemmabschnitt 63, ist das Dichtelement 58 am Befestigungsrahmen 69 formschlüssig fixiert, wobei zur mechanischen Fixierung noch eine Klammer 70 mit einem Ende 71 in einer Ausnehmung 72 des Grundkörpers 59 angeordnet wird. Aufgrund der geometrischen Struktur der Klammer 70 bzw. einer gegebenen Vorspannung dieser Klammer, wird das Dichtelement 58 kraft- und formschlüssig auf dem Befestigungsrahmen fixiert. Zur Erhöhung der mechanischen Festigkeit kann eine dem Befestigungsrahmen 69 zugewandte Flachseite 73 des Grundkörpers 59 mit einer adhäsiven Haftschicht ausgebildet sein, sodass nach Zusammenführen des Klemmabschnitts 63 und des Befestigungsrahmens 69, bereits eine haftende Verbindung zwischen dem Grundkörper 59 und dem Befestigungsrahmen 69 besteht. Insbesondere kann diese Haftschicht zusätzlich auch als Dichtschicht ausgebildet sein, sodass zwischen dem Grundkörper 59 und dem Befestigungsrahmen 69 eine flüssigkeitsdichte Anhaftung gegeben ist.

Das Dichtelement 58, insbesondere die Dichtfahne 60 und das Dichtprofil 62, sind aus einem elastisch rückstellbaren Material gebildet, bevorzugt aus einem natürlichen oder synthetischen Gummi, sowie Mischungen beiden (bspw. EPDM oder Silikon). Da derartige Materialien auf den bevorzugt metallischen Deckrahmen zumeist einen hohen Haftreibekoeffizienten aufweisen, kann auf den, dem Deckrahmen zugewandten Flächen der Dichtfahne 60 und/oder des Dichtprofils 62 eine Oberflächenschicht 74 aufgebracht sein, welche die Reibung zwischen den Kontaktflächen des Dichtelements und dem Deckrahmen reduziert, gleichzeitig jedoch eine zuverlässige Abdichtung gewährleistet. Diese Oberflächenschicht kann beispielsweise durch einen Gleitlack (Silikonlack o.ä.) gebildet sein.

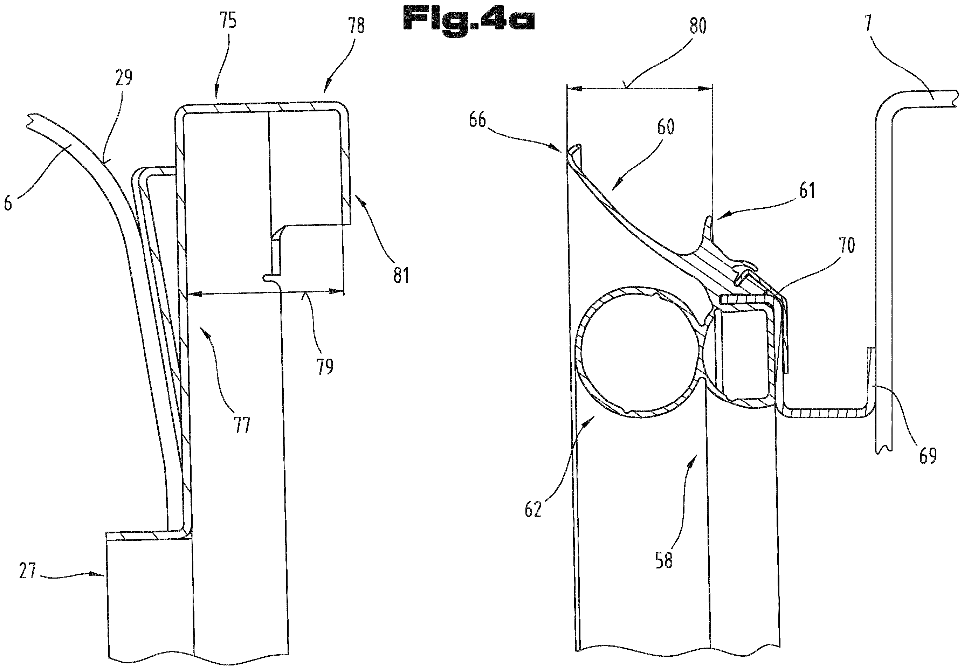

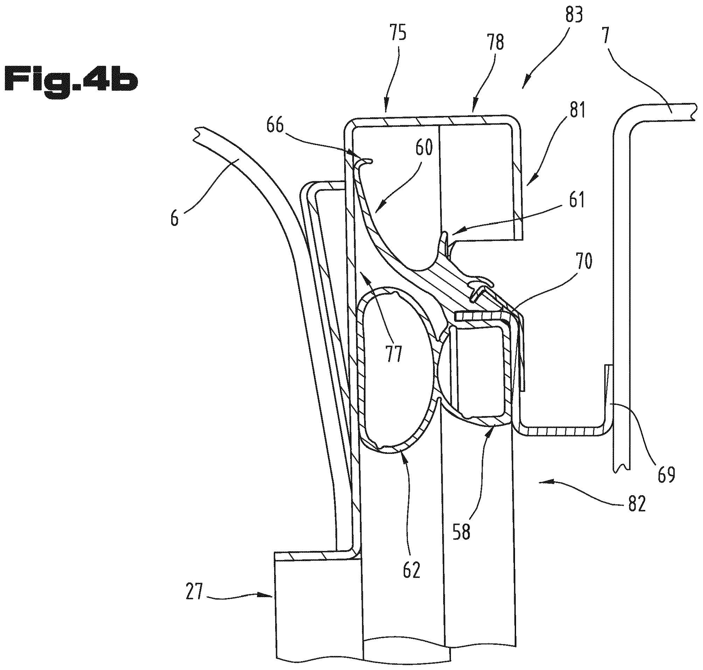

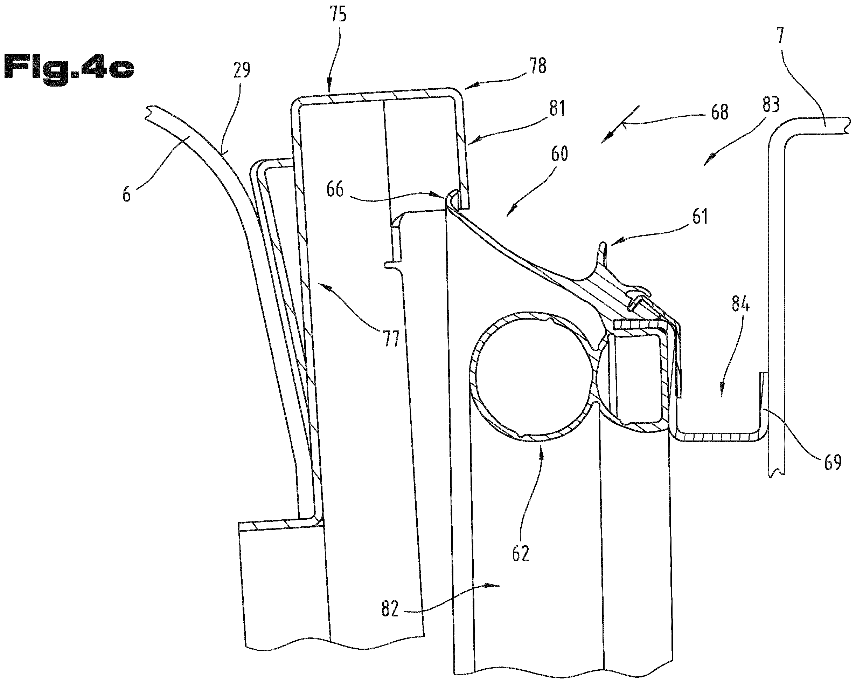

Die Fig. 4a und 4b zeigen das Dichtelement in geöffnetem und geschlossenem Zustand, um das Anliegen der Dichtfahne bzw. des Dichtprofils am Anlegeabschnitt zu verdeutlichen, wobei jeweils nur eine schematische Darstellung angegeben ist. Fig. 4c zeigt die Situation beim Abbremsen des Lastkraftwagens, wo sich die Fahrerkabine aufgrund der Verzögerungskräfte nach vor neigen wird.

Fig. 4a zeigt das erfindungsgemäße Dichtelement 58, welches mittels der Klammer 70 am Befestigungsrahmen 69 angebracht ist. Dieser Befestigungsrahmen ist mit der Mannschafts- und/oder Gerätekabine 7 verbunden. In horizontaler Richtung davon getrennt ist der mit der Fahrerkabine 6 verbundene Deckrahmen 75 dargestellt, welcher einen Anlegeabschnitt 77 aufweist, welcher ein möglichst großflächiges Anlegen der Dichtfahne 60 und des Dichtprofils 62 ermöglicht. Der Deckrahmen 75 weist insbesondere einen L-förmigen Schenkel 78 mit einer Breite 79 auf, welche Breite 79 derart gewählt ist, dass sie zumindest dem Horizontalabstand 80 zwischen dem Endbereich 66 der Dichtfahne und dem Endbereich der Schwall-Abweisnase 61 entspricht. Dies hat insbesondere den Vorteil, dass bei einer Bewegung der Fahrerkabine und damit verbunden bei einem nach vor Schwenken des Deckrahmens 75, ein Vertikalabschnitt 81 des Schenkels 78 Kontakt mit dem Endabschnitt 66 der Dichtfahne 60 hat und somit eine zuverlässige Abdichtung gegen eintretendes Schwallwasser gegeben ist. Im Ruhezustand überdeckt der Schenkel 78 des Deckrahmens 75 das Dichtprofil weitestgehend, zumindest bis zur Schwall-Abweisnase 61, sodass eintretendes Schwallwasser vom Vertikalabschnitt 81 in Richtung des U-förmigen Befestigungsrahmens 69 gelenkt wird.

Dieser Ruhezustand ist in Fig. 4b dargestellt. In dieser Fig. ist ferner schematisch dargestellt, wie sich die Dichtfahne 60 und das Dichtprofil 62 im Ruhezustand an den Anlegeabschnitt 77 anlegen und somit eine doppelte und insbesondere großflächige Abdichtung zwischen dem Kabinen-Innenraum 82 und dem Außenraum 83 ausbilden. Insbesondere ist zu erkennen, dass zumindest zwei Abflussrinnen gebildet werden, welche zutretendes Schwallwasser 68 vom Dichtungsbereich, insbesondere vom Anlegeabschnitt 77, ableiten. Eine erste Rinne 84 wird durch das Profil des Befestigungsrahmens 69 gebildet und leitet aufgrund der Anordnung des Schenkels 78 des Deckrahmens 75, den Großteil eines eintretenden Schwallwassers 68 ab. Ableiten bedeutet in diesem Zusammenhang, dass das Wasser vom Übergangsbereich zwischen der Fahrerkabine 6 und der Mannschafts- und/oder Gerätekabine 7 beispielsweise auf die Seiten des Lastkraftwagens abgeleitet wird, wo es ungehindert zu Boden fließen kann. Es ist jedoch auch eine Ableitung zu einem Abflusskanal möglich, der das Wasser bzw. gezielt an die Unterseite des Lastkraftwagens ableitet. Eine zweite Rinne 85 wird durch die konkav gekrümmte Dichtfahne 60, die Abweisnase 67 der Dichtfahne, und durch die Schwall-Abweisnase 61 gebildet, wobei das von dieser Rinne aufgefangene Wasser aufgrund der, die Fahrerkabine umlaufenden Ausbildung des Dichtelements 58 wiederum an die Seiten des Fahrzeugs abgeleitet wird.

In Fig. 4c ist die Situation beim Abbremsen des Fahrzeugs dargestellt, wobei sich die Fahrerkabine aufgrund der auftretenden Verzögerungskräfte nach vor neigen wird. Ein besonderer Vorteil des erfindungsgemäßen Dichtelements liegt nun ferner darin, dass auch bei einer starken Verschwenkung der Fahrerkabine 6, eine zuverlässige Abdichtung des Kabinen-Innenraums 82 gegenüber dem Außenraum 83 gewährleistet ist. Durch die sich nach vor neigende Fahrerkabine, wird das Dichtprofil 62 und die Dichtfahne 60 nicht mehr am Anlegeabschnitt 77 anliegen, wobei jedoch aufgrund der erfindungsgemäßen Ausbildung der Dichtfahne 60 und des Schenkels 78 des Deckrahmens 75, der Endbereich 66 der Dichtfahne 60 nun am Vertikalabschnitt 81 des Schenkels 78 anliegen wird und somit wiederum eine zuverlässige Abdichtung gewährleistet ist. Insbesondere ist auch in diesem Fall eine zuverlässige Ableitung von eintretendem Schwallwasser 68 gewährleistet, da dieses über die konkave Form der Dichtfahne 60 und über die Schwall-Abweisnase 61 und die erste Rinne 84 des Befestigungsrahmens 69 abgeleitet wird.

Die Ausführungsbeispiele zeigen mögliche Ausführungsvarianten des Lastkraftwagens, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.
Der Ordnung halber sei abschließend darauf hingewiesen, dass zum besseren Verständnis des Aufbaus des Lastkraftwagens dieser bzw. dessen Bestandteile teilweise unmaßstäblich und/oder vergrößert und/oder verkleinert dargestellt wurden.
Die den eigenständigen erfinderischen Lösungen zugrundeliegende Aufgabe kann der Beschreibung entnommen werden.

**Bezugszeichenaufstellung**

| | | | |
|---|---|---|---|
| 1 | Lastkraftwagen | 41 | Befestigungsrahmen |
| 2 | Feuerwehr-Einsatzfahrzeug | 42 | Schenkel |
| 3 | Fahrgestellrahmen | 43 | U-Profil |
| 4 | Fahrgestell | 44 | Schenkel |
| 5 | Doppelkabine | 45 | Verbindungsmittel |
| 6 | Fahrerkabine | 46 | Haftvorrichtung |
| 7 | Mannschafts- und/oder Gerätekabine | 47 | Anschlagrahmen |
| | | 48 | Hohlprofil |
| 8 | Dämpfungselement | 49 | Dauermagnete |
| 9 | Endbereich | 50 | Versteifungsrippen |
| 10 | Aufstandsfläche | | |
| | | 51 | Deckrahmen |
| 11 | Achse | 52 | Schenkel |
| 12 | Schwenklageranordnung | 53 | Schenkel |
| 13 | Antriebsmotor | 54 | Schenkellänge |
| 14 | Boden | 55 | Haltearm |
| 15 | Endbereich | | |
| | | 56 | Spiral-Zugfeder |
| 16 | Aufbau | 57 | Kabinen-Innenraum |
| 17 | Tank | 58 | Dichtelement |
| 18 | Löschmittel | 59 | Grundkörper |
| 19 | Längsseitenwand | 60 | Dichtfahne |
| 20 | Querseitenwand | | |
| | | 61 | Schwall-Abweisnase |
| 21 | Rollladen | 62 | Dichtprofil |
| 22 | Einbau | 63 | Klemmabschnitt |
| 23 | Gerät | 64 | Einschnürung |
| 24 | Versorgungsleitung | 65 | Krafteinwirkung |
| 25 | Löschmittelpumpe | | |
| | | 66 | Endbereich |
| 26 | Steuer- und Überwachungseinheit | 67 | Abweisenase |
| 27 | Durchgang | 68 | Richtung, Schwallwasser |
| 28 | Distanz | 69 | Befestigungsrahmen |
| 29 | Rückwand | 70 | Klammer |
| 30 | Querwand | | |
| | | 71 | Ende |
| 31 | Verbindungsvorrichtung | 72 | Ausnehmung |
| 32 | Balgdichtelement | 73 | Flachseite |
| 33 | Tür | 74 | Oberflächenschicht |
| 34 | Einstiegsöffnung | 75 | Deckrahmen |
| 35 | Treppenelement | | |
| | | 76 | |
| 36 | Aufstiegsvorrichtung | 77 | Anlegeabschnitt |
| 37 | Schwenkachse | 78 | Schenkel |
| 38 | Wandteil | 79 | Breite |
| 39 | Ausschnitt | 80 | Horizontalabstand |
| 40 | Ausschnitt | | |
| | | | |
| 81 | Vertikalabschnitt | | |
| 82 | Kabinen-Innenraum | | |
| 83 | Außenraum | | |
| 84 | Erste Rinne | | |
| 85 | Zweite Rinne | | |

## Patentansprüche

1. Lastkraftwagen (1), insbesondere Feuerwehr-Einsatzfahrzeug (2), mit einem auf einem Fahrgestellrahmen (3) gelagerten Aufbau mit einer um eine quer zur Fahrtrichtung verlaufenden, horizontalen Achse (11) verschwenkbaren Fahrerkabine (6) und zumindest einer auf dem Fahrgestell (4) gelagerten Mannschafts- und/oder Gerätekabine (7) und mit einem durch einander gegenüber liegende Öffnungen in einer Rückwand (29) der Fahrerkabine (6) und einer Querwand (30) der Mannschafts- und/oder Gerätekabine (7) gebildeten Durchgang (27) mit einer den Durchgang (27) mit zumindest einem flexibles Dichtelement (58) umfassenden lösbaren Verbindungseinrichtung (31), welches Dichtelement einen Kabinen-Innenraum (82) von einem Außenraum (83) trennt und mit einem unabhängig von der Fahrerkabine (6) und der Mannschafts- und/oder Gerätekabine (7) auf dem Fahrgestellrahmen (3) gelagerten Aufbau (16) mit Einbauten für die Lagerung von Werkzeugen und Einsatzgeräten und mit über zumindest eine Aufstiegsvorrichtung (36) zugängliche Einstiegs und/oder Bedienöffnungen in Quer- und/oder Längsseitenwänden des Aufbaus (16), wobei das Dichtelement über einen Befestigungsrahmen (41) an einer Querwand (30) der Mannschafts- und/oder Gerätekabine (7) befestigt ist und das Dichtelement von einem, im Wesentlichen L-förmigen Schenkel (78) eines an der Rückwand (29) der Fahrerkabine befestigten Deckrahmens (51) zumindest teilweise umfasst wird, **dadurch gekennzeichnet, dass** das Dichtelement (58) einen Grundkörper (59) mit einer elastische Dichtfahne (60), ein Dichtprofil (62) und einen nutförmigen Klemmabschnitt (63) aufweist und mittels eines Verbindungsmittels (70) mit dem Befestigungsrahmen (69) verbunden ist, wobei ferner der Befestigungsrahmen (69) einen im Wesentlichen U-förmigen Querschnitt aufweist und wobei der Deckrahmen (75) zumindest abschnittsweise einen Anlegeabschnitt (77) aufweist, wobei im Ruhezustand des Lastkraftwagens (1) das Dichtprofil (62) am Anlegeabschnitt (77) anliegt, wodurch es zu einer reversiblen Querschnittsänderung des Dichtprofils (62) kommt, und wobei ferner die Dichtfahne (60) am Anlegeabschnitts (77) anliegt und wobei beim Abbremsen des Lastkraftwagens (1) der Endbereich (66) der Dichtfahne (60) an einem Vertikalabschnitt (81) des Schenkels (78) des Deckrahmens (75) anliegt.

2. Lastkraftwagen nach Anspruch 1, **dadurch gekennzeichnet, dass** das Dichtprofil (62) ferner eine in Richtung des Außenraums (83) orientierte Schwall-Abweisnase (61) aufweist.

3. Lastkraftwagen nach Anspruch 1 oder 2, **dadurch gekennzeichnet, dass** das Dichtprofil (62) durch ein elastisches Hohlprofil, bevorzugt mit einem kreisförmigen Querschnitt, gebildet ist.

4. Lastkraftwagen nach einem der Ansprüche 1 bis 3, **dadurch gekennzeichnet, dass** das Dichtprofil (62) entlang des Umfangs zumindest zwei Einschnürungen (64) der Wandstärke aufweist.

5. Lastkraftwagen nach einem der Ansprüche 1 bis 4, **dadurch gekennzeichnet, dass** der Grundkörper (59) als Hohlprofil ausgebildet ist, welches entlang des Umfangs zumindest zwei Einschnürungen (64) der Wandstärke aufweist.

6. Lastkraftwagen nach einem der Ansprüche 1 bis 5, **dadurch gekennzeichnet, dass** das Dichtprofil (62) dem Kabinen-Innenraum (82) zugewandt angeordnet ist.

7. Lastkraftwagen nach einem der Ansprüche 1 bis 6, **dadurch gekennzeichnet, dass** der Grundkörper (59) eine Außenfläche (73) mit einer aufgebrachten Haftschicht aufweist.

8. Lastkraftwagen nach einem der Ansprüche 1 bis 7, **dadurch gekennzeichnet, dass** das Verbindungsmittel (70) als Klammer ausgebildet ist, welche in eine Ausnehmung (72) des Grundkörpers (59) eingreift und den Grundkörper (59) am Befestigungsrahmen (69) fixiert.

9. Lastkraftwagen nach einem der Ansprüche 1 bis 8, **dadurch gekennzeichnet, dass** die Dichtfahne (60) im Querschnitt zum Außenraum (83) hin konkav gekrümmt ist.

10. Lastkraftwagen nach einem der Ansprüche 1 bis 9, **dadurch gekennzeichnet, dass** die Dichtfahne (60) am freien Ende (66) eine zum Außenraum (83) rückwärts gerichtete Abweisnase (67) aufweist.

11. Lastkraftwagen nach einem der Ansprüche 1 bis 10, **dadurch gekennzeichnet, dass** auf die dem Kabinen-Innenraum (82) zugewandten Flächen der Dichtfahne (60) und des Dichtprofils (62) zumindest abschnittsweise eine Belackung aufgebracht ist.

12. Lastkraftwagen nach einem der Ansprüche 1 bis 11, **dadurch gekennzeichnet, dass** die Breite (79) des Schenkels (78) zumindest dem Horizontalabstand (80) zwischen dem freien Ende (66) der Dichtfahne (60) und der Schwall-Abweisnase (61) entspricht.

13. Lastkraftwagen nach einem der Ansprüche 1 bis 12, **dadurch gekennzeichnet, dass** die Querschnittsänderung zumindest 50% der unkomprimierten Ausdehnung in Richtung zwischen dem Befestigungsrahmen (69) und dem Deckrahmen (75) beträgt.

14. Lastkraftwagen nach einem der Ansprüche 1 bis 13, **dadurch gekennzeichnet, dass** der Anlegeabschnitt (77) rampenförmig ausgebildet ist.

15. Lastkraftwagen nach einem der Ansprüche 1 bis 14, **dadurch gekennzeichnet, dass** zwischen der Oberkante der Schwall-Abweisnase (61) und der Endkante des Schenkels (78) ein vertikaler Abstand besteht.

## Claims

1. A commercial vehicle (1), particularly a fire-fighting vehicle (2), with a superstructure that is mounted on a chassis frame (3) and features a driver's cabin (6), which is pivotable about a horizontal axis (11) extending transverse to the driving direction, and at least one crew and/or equipment cabin (7) mounted on the chassis (4), as well as a passage (27) formed by opposite openings in a rear wall (29) of the driver's cabin (6) and a transverse wall (30) of the crew and/or equipment cabin (7), wherein said passage features a detachable connecting device (31) that encloses the passage (27) with at least one flexible sealing element (58), and wherein said sealing element separates a cabin interior (82) from an exterior (83), and with a superstructure (16) that is mounted on the chassis frame (3) independently of the driver's cabin (6) and the crew and/or equipment cabin (7) and features installations for the storage of tools and equipment, as well as entry and/or access openings in transverse and/or longitudinal sidewalls of the superstructure (16), which are accessible via at least one climbing device (36), wherein the sealing element is mounted on a transverse wall (30) of the crew and/or equipment cabin (7) by means of a mounting frame (41) and the sealing element is at least partially encompassed by an essentially L-shaped limb (78) of a cover frame (51) mounted on the rear wall (29) of the driver's cabin, **characterized in that** the sealing element (58) features a base body (59) with an elastic sealing strip (60), a sealing profile (62) and a groove-shaped clamping section (63) and is connected to the mounting frame (69) with the aid of a connecting means (70), wherein the mounting frame (69) has an essentially U-shaped cross section and the cover frame (75) at least sectionally features a contact section (77), wherein the sealing profile (62) rests against the contact section (77) in the idle state of the commercial vehicle (1) such that the cross section of the sealing profile (62) is changed in a reversible fashion, wherein the sealing strip (60) furthermore rests against the contact section (77), and wherein the end region (66) of the sealing strip (60) rests against a vertical section (81) of the limb (78) of the cover frame (75) during a deceleration of the commercial vehicle (1).

2. The commercial vehicle according to claim 1, **characterized in that** the sealing profile (62) furthermore features a splash-deflecting projection (61), which is oriented in the direction of the exterior (83).

3. The commercial vehicle according to claim 1 or 2, **characterized in that** the sealing profile (62) is formed by an elastic hollow profile, which preferably has a circular cross section.

4. The commercial vehicle according to one of claims 1 to 3, **characterized in that** the sealing profile (62) features at least two wall thickness constrictions (64) along the circumference.

5. The commercial vehicle according to one of claims 1 to 4, **characterized in that** the base body (59) is realized in the form of a hollow profile, which features at least two wall thickness constrictions (64) along the circumference.

6. The commercial vehicle according to one of claims 1 to 5, **characterized in that** the sealing profile (62) is arranged such that it faces the cabin interior (82).

7. The commercial vehicle according to one of claims 1 to 6, **characterized in that** the base body (59) features an outer surface (73) with an applied adhesive layer.

8. The commercial vehicle according to one of claims 1 to 7, **characterized in that** the connecting means (70) is realized in the form of a clamp, which engages into a recess (72) of the base body (59) and fixes the base body (59) on the mounting frame (69).

9. The commercial vehicle according to one of claims 1 to 8, **characterized in that** the cross section of the sealing strip (60) is curved toward the exterior (83) in a concave fashion.

10. The commercial vehicle according to one of claims 1 to 9, **characterized in that** the sealing strip (60) features on its free end (66) a deflecting projection (67), which is oriented rearward in the direction of the exterior (83).

11. The commercial vehicle according to one of claims 1 to 10, **characterized in that** a coat of paint is at least sectionally applied on the surfaces of the sealing strip (60) and the sealing profile (62) facing the cabin interior (82).

12. The commercial vehicle according to one of claims 1 to 11, **characterized in that** the width (79) of the limb (78) corresponds at least to the horizontal clearance (80) between the free end (66) of the sealing strip (60) and the splash-deflecting projection (61).

13. The commercial vehicle according to one of claims 1 to 12, **characterized in that** the cross-sectional change amounts to at least 50% of the uncompressed size in the direction between the mounting frame (69) and the cover frame (75).

14. The commercial vehicle according to one of claims 1 to 13, **characterized in that** the contact section (77) is realized in a ramp-shaped fashion.

15. The commercial vehicle according to one of claims 1 to 14, **characterized in that** a vertical clearance exists between the upper edge of the splash-deflecting projection (61) and the terminal edge of the limb (78).

## Revendications

1. Camion (1), en particulier véhicule d'intervention de lutte contre les incendies (2), ayant une structure montée sur un cadre de châssis (3) avec une cabine du conducteur (6) pouvant pivoter autour d'un axe horizontal (11) s'étendant transversalement à la direction de déplacement, et au moins une cabine d'équipage et/ou de d'équipements (7) monté sur le châssis (4), et avec un passage (27) formé par des ouvertures mutuellement opposées situées dans une paroi arrière (29) de la cabine de conducteur (6) et une paroi transversale (30) de la cabine d'équipage et/ou de d'équipements (7), un dispositif de liaison libérable (31) étant inclus dans le passage (27) avec au moins un élément d'étanchéité flexible (58), lequel élément d'étanchéité sépare un espace intérieur de cabine (82) d'un espace extérieur (83), et avec une structure (16) montée indépendamment de la cabine de conducteur (6) et de la cabine d'équipage et/ou de d'équipements (7) sur le cadre de châssis (3), avec des éléments encastrés pour le stockage d'outils et d'équipements d'intervention et avec des entrées ou ouvertures d'accès accessibles via au moins un dispositif de montée (36) dans les parois latérales transversales et/ou longitudinales de la structure (16), dans lequel l'élément d'étanchéité est fixé sur un cadre de fixation (41) sur une paroi transversale (30) de la cabine d'équipage et/ou de d'équipements (7), et l'élément d'étanchéité va être inclus au moins partiellement par une branche sensiblement en forme de L (78) d'un cadre de plafond (51) fixée à une paroi arrière (29) de la cabine de conducteur, **caractérisé en ce que** l'élément d'étanchéité (58) présente un corps principal (59) avec une ailette d'étanchéité (60), un profilé d'étanchéité (62) et une partie de serrage en forme de rainure (63), et est relié au cadre de fixation (69) par l'intermédiaire de moyens de liaison (70), dans lequel le cadre de fixation (69) présente de plus une section transversale sensiblement en forme de U, et dans lequel le cadre de plafond (75) présente au moins par endroits une partie de mise en place (77), dans lequel le profilé d'étanchéité (62) se met en place dans la partie de mise en place (77) dans l'état de repos du camion (1), de sorte qu'une modification de section transversale réversible du profilé d'étanchéité (62) est obtenue, et dans lequel en outre l'ailette d'étanchéité (60) est mise en place dans la partie de mise en place (77), et dans lequel par un freinage du camion (1), la zone d'extrémité (66) de l'ailette d'étanchéité (60) se met en place sur la partie verticale (81) de la branche (78) du cadre de plafond (75).

2. Camion selon la revendication 1, **caractérisé en ce que** le profilé d'étanchéité (62) comprend en outre un nez déflecteur de flot (61) orienté dans la direction de l'espace extérieur (83).

3. Camion selon la revendication 1 ou 2, **caractérisé en ce que** le profilé d'étanchéité (62), de préférence avec une section transversale circulaire, est formé par un profilé creux élastique.

4. Camion selon l'une quelconque des revendications 1 à 3, **caractérisé en ce que** le profilé d'étanchéité (62) présente le long de la périphérie au moins deux rétrécissements (64) de l'épaisseur de paroi.

5. Camion selon l'une quelconque des revendications 1 à 4, **caractérisé en ce que** le corps principal (59) est réalisé sous la forme d'un profilé creux qui présente au moins deux rétrécissements (64) de l'épaisseur de paroi le long de la circonférence.

6. Camion selon l'une quelconque des revendications 1 à 5, **caractérisé en ce que** le profilé d'étanchéité (62) est agencé faisant face à l'espace intérieur de cabine (82).

7. Camion selon l'une quelconque des revendications 1 à 6, **caractérisé en ce que** le corps principal (59) présente une surface extérieure (73) sur laquelle une couche adhésive a été appliquée.

8. Camion selon l'une quelconque des revendications 1 à 7, **caractérisé en ce que** les moyens de liaison (70) sont réalisés sous la forme d'une attache qui vient en prise dans un évidement (72) du corps principal (59) et qui fixe le corps principal (59) sur le cadre de fixation (69).

9. Camion selon l'une quelconque des revendications 1 à 8, **caractérisé en ce que** l'ailette d'étanchéité (60) est incurvée de manière concave en coupe transversale par rapport à l'espace extérieur (83).

10. Camion selon l'une quelconque des revendications 1 à 9, **caractérisé en ce que** l'ailette d'étanchéité (60) présente à l'extrémité libre (66) un nez déflecteur (67) orienté vers l'arrière de l'espace extérieur (83).

11. Camion selon l'une quelconque des revendications 1 à 10, **caractérisé en ce qu'**une laque est appliquée au moins par endroits sur les surfaces faisant face à l'espace intérieur de cabine (82) de l'ailette d'étanchéité (60) et du profilé d'étanchéité (62).

12. Camion selon l'une quelconque des revendications 1 à 11, **caractérisé en ce que** la largeur (79) de la branche (78) correspond au moins à la distance horizontale (80) entre l'extrémité libre (66) de l'ailette d'étanchéité (60) et le nez déflecteur de flot (61).

13. Camion selon l'une quelconque des revendications 1 à 12, **caractérisé en ce que** le changement de section transversale correspond à au moins 50 % de l'étendue non comprimée dans la direction entre le cadre de fixation (69) et le cadre de plafond (75).

14. Camion selon l'une quelconque des revendications 1 à 13, **caractérisé en ce que** la partie de mise en place (77) est réalisée en forme de rampe.

15. Camion selon l'une quelconque des revendications 1 à 14, **caractérisé en ce qu'**il existe une distance verticale entre le bord supérieur du nez déflecteur de flot (61) et le bord d'extrémité de la branche (78).
